# EUROPEAN PATENT APPLICATION

(11) **EP 4 498 064 A1**
(43) Date of publication of application: **29.01.2025**
(21) Application number: 23187957.8
(22) Date of filing: 26.07.2023
(51) Int. Cl.: G01N 21/01, G01N 21/25, G01N 21/47, G01N 21/88, G01N 21/84

(54) **SAMPLE ILLUMINATION**

(71) Applicant: Technische Hochschule Ingolstadt, in Vertretung des Freistaates Bayern, 85049 Ingolstadt (DE)
(72) Inventor: Mühenad, Bilal, 80639 Munich (DE)
(74) Representative: Koplin, Moritz

(57) **Abstract**

Provided is an apparatus for capturing image data relating to a sample. The apparatus comprises a sample holder, an emitter which is configured to emit electromagnetic radiation, and an enclosure which is configured to accommodate the emitter and the sample. The emitter extends along a closed planar path. The sample holder is configured to hold the sample or a surface of interest of the sample in a vicinity of, or intersecting with, a center of the closed planar path or a straight line which runs through the center and extends perpendicular to the closed planar path. The emitter is configured to emit the electromagnetic radiation from an outward-facing surface of the emitter onto an inward-facing surface of the enclosure which is configured to diffusively reflect the electromagnetic radiation onto the sample.

## Description

### FIELD

The present disclosure relates to a method of illuminating a sample and an apparatus for capturing image data relating to a sample. More particularly, the present disclosure relates to homogeneously illuminating a sample within an enclosure that has a point symmetrical inward-facing surface.

### BACKGROUND

Depending on the object's surface and the lighting conditions, the analysis of a sample may be considerably impaired by uneven illumination and/or specular reflections.

### SUMMARY

The present invention is directed at an apparatus for capturing image data relating to a sample and a method of illuminating a sample.

The apparatus comprises a sample holder, an emitter which is configured to emit electromagnetic radiation, and an enclosure which is configured to accommodate the emitter and the sample, wherein the emitter extends along a closed planar path, wherein the sample holder is configured to hold the sample or a surface of interest of the sample in a vicinity of, or intersecting with, a center of the closed planar path or a straight line which runs through the center and extends perpendicular to the closed planar path, and wherein the emitter is configured to emit the electromagnetic radiation from an outward-facing surface of the emitter onto an inward-facing surface of the enclosure which is configured to diffusively reflect the electromagnetic radiation onto the sample.

In this regard, the term "sample holder", as used throughout the description and the claims, particularly refers to a support structure which allows for a horizontal displacement (e.g., along the x-axis and the y-axis of a Cartesian coordinate system having its origin at the center) and/or a vertical displacement of the sample (e.g., along the z-axis of the Cartesian coordinate system) and/or a rotation of the sample around a vertical axis. For instance, the displacement/rotation of the support structure may be provided by one or more actuators such as electrical motors. Moreover, the displacement/rotation may be effectuated during or between instances when image data is captured. For instance, a human operator or a computer program executed on a computing device (such as a controller) which controls the one or more actuators may effectuate a displacement/rotation until the surface of interest of the sample has a preferred position/orientation. Furthermore, the sample holder may be coated with barium sulfate or may comprise silica glass. For example, the sample holder may be a (static) pedestal made of silica glass.

Moreover, the human operator or a computer program may cause image data representing photo or video imagery to be captured and to initiate or to perform an analysis of the photo or video imagery. For example, the photo or video imagery may be used to compare an actual shape/coloration of the surface of interest of the sample and an expected/desired shape/coloration (i.e. a reference) of the surface of interest of the sample. More generally, the photo or video imagery may be used to determine geometrical, physical, chemical, and/or biological properties of the surface of interest of the sample or of a layer below the surface of interest of the sample (if the electromagnetic radiation is capable of penetrating the surface of interest of the sample). Notably, the image data may be based on sensor signals provided by one or more sensors that are sensitive to electromagnetic radiation which is outside the visible range. For instance, the sensor may be sensitive to infrared radiation and may thus enable infrared photo or video imagery. In some embodiments the sensor may be sensitive to ultraviolet radiation and may thus enable ultraviolet photo or video imagery.

Furthermore, the term "emitter", as used throughout the description and the claims, particularly refers to a device comprising one or more electromagnetic radiation emitting devices. The one or more electromagnetic radiation emitting devices may be semiconductor structures which emit electromagnetic radiation when an electric current flows through the semiconductor structures. For example, the emitter may comprise one or more light emitting diodes (LEDs), laser diodes (LDs), or vertical cavity surface emitting lasers (VCSELs). The LEDs may emit monochromatic or polymetric light. The one or more electromagnetic radiation emitting devices may be provided or may interact with devices for diffusing the electromagnetic radiation emitted by the one or more electromagnetic radiation emitting devices. For example, one or more (small) transparent or semi-transparent plates or bands with a high surface roughness (e.g., plates or bands made of polymethylmethacrylate (PMMA)) may be placed in front of the one or more electromagnetic radiation emitting devices (i.e., in the trajectory/path along which the electromagnetic radiation emitted by the emitter propagates) to diffuse the electromagnetic radiation emitted by the one or more electromagnetic radiation emitting devices. The apparatus may allow for adjusting the vertical position of the emitter and/or for replacing an emitter with another emitter, wherein both emitters may differ in shape or size.

The emitter may allow for adapting the intensity and/or frequency (distribution) of the electromagnetic radiation emitted by the emitter. The frequency distribution of the electromagnetic radiation emitted by the emitter may have distinct peaks at one or more frequencies. According to some embodiments, the emitter may comprise different groups of semiconductor structures which emit electromagnetic radiation within different (overlapping or non-overlapping) frequency ranges or of different frequencies. For example, a first group of semiconductor structures may emit electromagnetic radiation within a first frequency range and a second group of semiconductor structures may emit electromagnetic radiation within a second frequency range which differs from the first frequency range. Alternatively, a first group of semiconductor structures may emit electromagnetic radiation of a first frequency and a second group of semiconductor structures may emit electromagnetic radiation of a second frequency which differs from the first frequency. Furthermore, the emitter may emit electromagnetic radiation in a spectrum that is visible to the human eye.

Moreover, the term "enclosure", as used throughout the description and the claims, particularly refers to a structure which separates an interior of the apparatus from an exterior of the apparatus. The enclosure may comprise portions that reflect the electromagnetic radiation emitted by the emitter but may also comprise a transparent portion or an aperture which allows electromagnetic radiation emitted by the emitter to pass from the interior to the exterior. A first (e.g., vertical) cross section of the interior may have an oval or elliptical shape and a perpendicular second (e.g., horizontal) cross section of the interior may have a circular shape. The interior (as delimited by the enclosure) may be cylindrically or circularly symmetric. The inward facing surface of the enclosure may delimit a cavity that is lens-shaped or ellipsoid-shaped. The enclosure may be formed by two or more segments. For example, the enclosure may be formed by a lower segment and an upper segment joined at a plane dividing the cavity into a lower half and an upper half.

The inward-facing surface of the lower segment and the upper segment may be point-symmetric to a center of the cavity (when both segments are joined). However, the segments may also differ in shape. Moreover, the apparatus may come with different lower segments and upper segments from which an operator may select according to the shape, size, and nature of the sample. For example, the apparatus may comprise a first upper segment and a second upper segment, wherein the inward facing surface of the first upper segment forms a hemisphere and the inward facing surface of the second upper segment forms another shape. Moreover, the enclosure may be divided into a more than two segments, e.g., into a lower segment, an upper segment, and a middle segment, and potentially may comprise multiple options for each segment which are to be selected by the operator, taking into account the shape, size, and nature of the sample.

The position and shape of the emitter may shield the sample from direct illumination while at the same time ensure even illumination.

The electromagnetic radiation emitting devices (e.g., light emitting devices) may be evenly distributed along the closed planar path. For example, the electromagnetic radiation emitting devices may be placed (side-by-side or with a spacing between neighboring electromagnetic radiation emitting devices) in a row which extends along the closed planar path. The apparatus my comprise multiple neighboring rows (of electromagnetic radiation emitting devices). The electromagnetic radiation emitting devices arranged in said two or more neighboring rows may form columns. The rows may extend horizontally, and the columns may extend vertically. The electromagnetic radiation emitting devices in two neighboring rows or columns may differ regarding the spectrum of the electromagnetic radiation emitted by the rows or columns, respectively. The apparatus may allow for individual or collective control of rows, columns, or electromagnetic radiation emitting devices.

The closed planar path may lie in a plane which divides the cavity formed by the enclosure into two halves of substantially equal size. The plane may be a horizontal plane. The center may lie in the horizontal plane.

The closed planar path may be a circle. A space inside the enclosure may be substantially cylindrically or circularly symmetric to an axis colinear with the straight line. Having the light emitting devices arranged along a circle within a cylindrically symmetric cavity may improve the evenness of the illumination of the sample. For example, the light emitting devices may be placed side-by-side, or with equal spacing between neighboring light emitting devices, along the circle. The inward-facing surface of the enclosure may be cylindrically symmetric to an axis that runs through the center of the circle and extends perpendicularly to the plane in which the circle lies. As a result, the intensity of the light reflected by an area on the inner surface may be independent of the position of the area along the circumferential direction.

The straight line may run through a transparent portion of, or an aperture in the enclosure. This may allow observing the sample or a surface of interest of the sample with equipment (such as a microscope and/or a camera) that is arranged outside of the enclosure.

The apparatus may further comprise a sensor which is configured to detect the electromagnetic radiation. The sensor may be an optical sensor (e.g., an optical sensor of a camera) which provides sensor signals from which image data relating to the sample may be derived. In this regard, the term "sensor", as used throughout the description and the claims, particularly refers to a structure with a semiconducting active surface which converts electromagnetic radiation incident on the semiconducting active surface to an electric signal. The active region may be arranged such as to face the sample and there may be a (substantially) unobstructed line of sight between the active region and the sample (when the sample is arranged within the enclosure). However, there may be optical elements placed in the path between the active region and the sample. For instance, the sensor may be part of a camera which is configured to record an image of the sample and the camera may comprise a lens arrangement.

The transparent portion or aperture may be aligned with the active region. The size of the transparent portion or aperture may be small to increase the depth of focus. Moreover, the apparatus may allow for changing the size of the transparent portion or aperture. Furthermore, the apparatus may allow for changing the shape of the transparent portion or aperture. For example, the transparent portion or aperture may have a rectangular shape or a circular shape (or any other shape, depending on the usage scenario). The sensor may also be placed inside or may be integrated into the enclosure such as at or into the top portion/upper segment of the enclosure.

The sensor may be attached to a sensor arm of the apparatus which allows for rotating the sensor around a point on the straight line.

Enabling sensor rotation may allow for changing the view represented by the image data.

A cross section of the outward-facing surface may have a concave shape. The concave shape may increase the number of times a ray of light is (on average) diffusely reflected before being directed onto the sample. In other words, the concave shape directs the electromagnetic radiation away from the sample to ensure that the electromagnetic radiation is reflected multiple times at the inward-facing surface of the enclosure before being reflected or reemitted by the sample onto the sensor.

The enclosure may comprise a lower segment having a bottom and an upper segment having a top, wherein the lower segment tapers towards the bottom and the upper segment tapers towards the top. The lower segment may be bowl-shaped, and the upper segment may be bowl-shaped. The bowl-shaped segments may be joined at their rims.

The enclosure and the outward-facing surface may comprise aligned openings which allow for attaching the sample to or placing the sample on the sample holder. Likewise, the sample may be attached to an adapter or to the sample holder outside of the enclosure and the adapter or the sample holder (together with the sample) may be inserted into the enclosure and attached to the sample holder or a receptacle, respectively.

The inward-facing surface of the enclosure may be coated with a coating that is configured to diffuse electromagnetic radiation, e.g., a barium sulfate (BaSO₄) coating.

The method comprises arranging the sample in an enclosure having an inward-facing surface that is coated with a diffuse coating such as barium sulfate and illuminating the sample with light that has been emitted from an outward-facing surface of a ring-shaped emitter and diffusely reflected by the inward-facing surface of the enclosure onto the sample.

In this regard, the term "outward-facing surface", as used throughout the description and the claims, particularly refers to a surface facing away from the sample. Consequently, the term "inward-facing surface", as used throughout the description and the claims, particularly refers to a surface facing the sample (regardless of whether the line of sight between the surface and the sample is blocked by the emitter or not).

The ring-shaped emitter may extend around the sample. Thus, by emitting light from the outward-facing surface of the ring-shaped emitter, the sample is protected from direct illumination.

A cross section through the ring-shaped emitter may have a U-shaped or C-shaped portion directing the light that has been emitted from the outward-facing surface of the ring-shaped emitter radially toward the inward-facing surface of the enclosure.

The U-shaped, C-shaped, or I-shaped portion may comprise legs which are coated with a coating that is configured to diffuse the light, e.g., a barium sulfate (BaSO₄) coating.

The method may further comprise recording an image of a surface of the sample and analyzing the recorded image.

The image may be analyzed for defects. For instance, the apparatus or a computer connected to the sensor may comprise a processor and non-volatile memory storing a set of instructions which when executed by the processor cause the processor to perform edge detection on the image. The set of instructions may also comprise instructions which cause the processor to compare the detected edges with edges of an error-free sample of the same type (or making) (i.e., a reference sample) and/or to compare the detected edges with theoretically determined edges of an error-free sample of the same type (or making). Depending on the result of the comparison, the apparatus may classify the sample as acceptable or inacceptable. The analysis may also be used to repair the sample or to modify a manufacturing process. For instance, a machine or tool used in the manufacturing process may be replaced or undergo maintenance to avoid (or to reduce the severity/likelihood of) future defects during the manufacturing process.

Notably, the features described throughout the specification with regard to the method may be features of the apparatus and vice versa.

### BRIEF DESCRIPTION OF THE DRAWINGS

The foregoing aspects and many of the attendant advantages will become more readily appreciated as the same become better understood by reference to the following description of embodiments, when taken in conjunction with the accompanying drawings, wherein like reference numerals refer to like parts throughout the various views, unless otherwise specified.
Fig. 1 shows a schematic side-view and a schematic top-view of an apparatus for capturing image data relating to a sample.
Fig. 2 illustrates how a sample may be inserted into the apparatus shown in Fig. 1.
Fig. 3 illustrates how image data relating to the sample may be captured using a camera which is attached to the apparatus shown in Fig. 1.
Fig. 4 illustrates how the sample may be positioned in the apparatus shown in Fig. 1.
Fig. 5 shows a schematic side-view and a schematic top-view of a lower segment of the enclosure of the apparatus shown in Fig. 1 and of an emitter arranged in the lower segment.
Fig. 6 shows a schematic top-view and a schematic cross-sectional view of the lower segment of the enclosure of the apparatus shown in Fig. 1 and of an emitter arranged in the lower segment.
Fig. 7 shows a schematic top-view and a schematic cross-sectional view of the lower segment of the enclosure of the apparatus shown in Fig. 1 and of an emitter arranged in the lower segment according to a first modification.
Fig. 8 shows a schematic top-view and a schematic cross-sectional view of the lower segment of the enclosure of the apparatus shown in Fig. 1 and of an emitter arranged in the lower segment according to a second modification.
Fig. 9 shows a schematic top-view and a schematic cross-sectional view of the lower segment of the enclosure of the apparatus shown in Fig. 1 and of an emitter arranged in the lower segment according to a third modification.
Fig. 10 shows a schematic side-view and another schematic cross-sectional view of the lower segment of the enclosure of the apparatus shown in Fig. 1.
Fig. 11 shows a schematic side-view of the apparatus shown in Fig. 1 according to a first modification.
Fig. 12 shows a schematic side-view of the apparatus shown in Fig. 1 according to a second modification.
Fig. 13 shows a flow-chart of a method of illuminating a sample.
Fig. 14a shows image data relating to a sample, wherein the image data is captured using a conventional illumination technique.
Fig. 14b shows image data relating to a sample, wherein the image data is captured using the apparatus.

Notably, not all drawings are drawn to scale and unless otherwise indicated, they are merely intended to conceptually illustrate the structures and procedures described herein.

### DESCRIPTION OF EMBODIMENTS

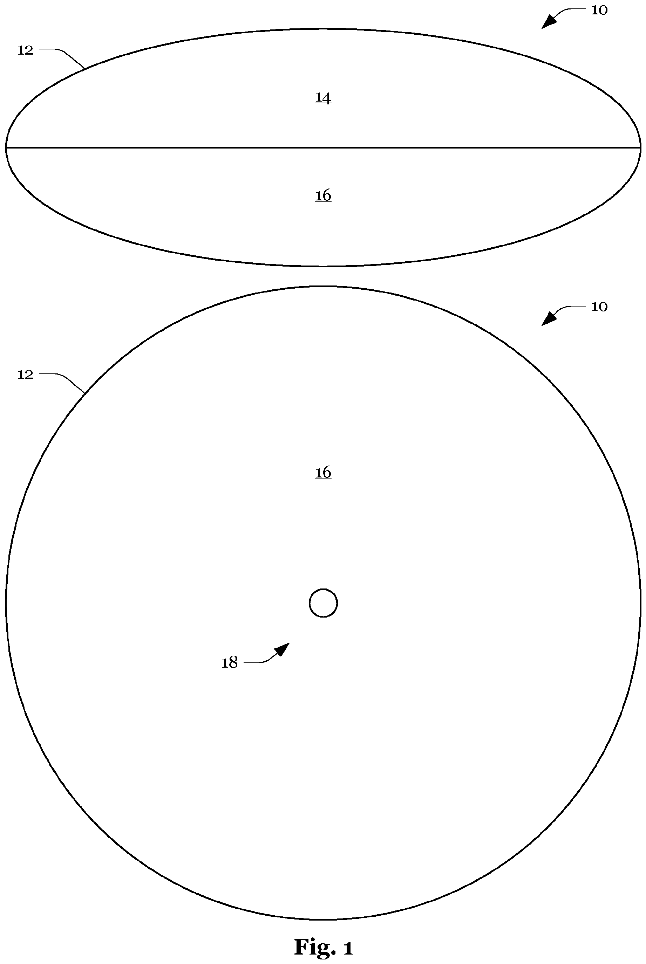

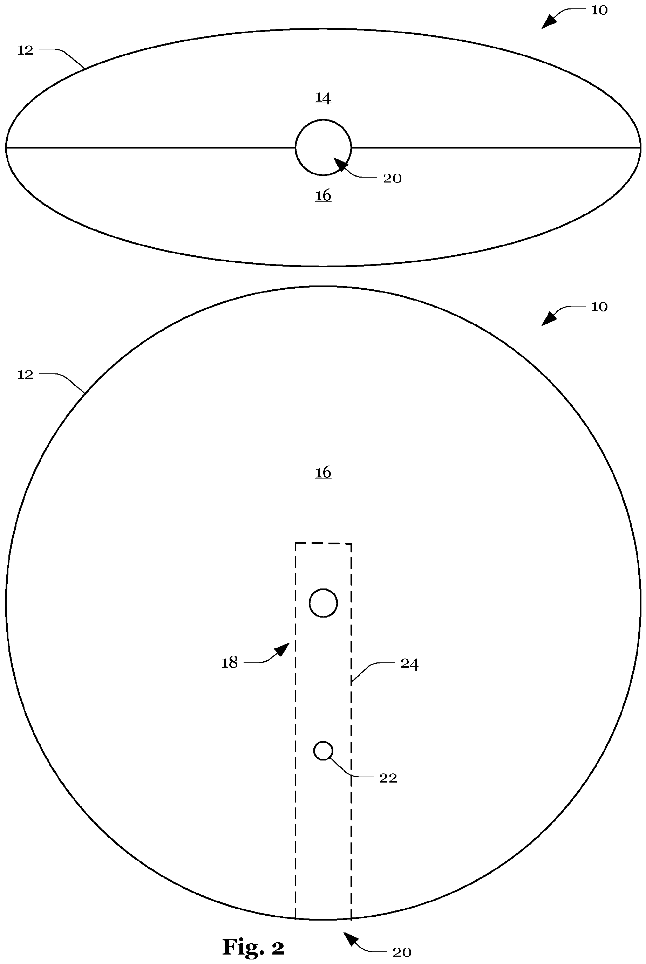

Fig. 1 shows a side-view and a top-view of an apparatus 10 for capturing image data relating to a sample (not shown). The enclosure 12 of the apparatus 10 is divided into an upper segment 14 and a lower segment 16. The upper segment 14 comprises a transparent portion or aperture 18 for capturing the image data relating to the sample (not shown) when the sample is arranged in the enclosure 12. As shown in Fig. 1, the enclosure 12 exhibits an oval shape in side-view and a circular shape in top-view. As illustrated in Fig. 2, the enclosure 12 may have an opening 20 through which the sample 22 may be inserted into the enclosure 12. The opening 20 may have a circular shape, wherein an upper hemisphere of the opening 20 may be formed in the upper segment 14 of the enclosure 12 and a lower hemisphere of the opening 20 may be formed in the lower segment 16 of the enclosure 12. Moreover, a channel 24 may extend from the opening 20 through an emitter (not shown) to a center of the enclosure 12 below the transparent portion or aperture 18.

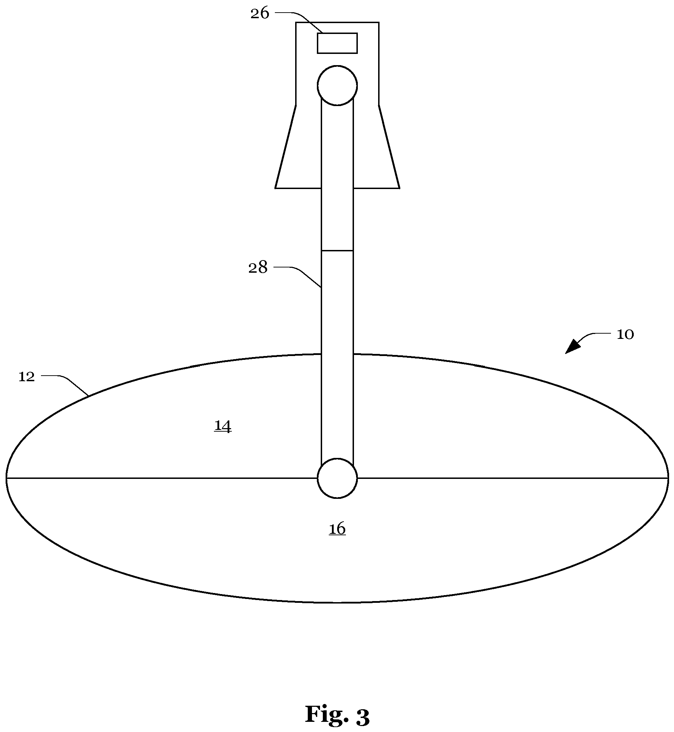

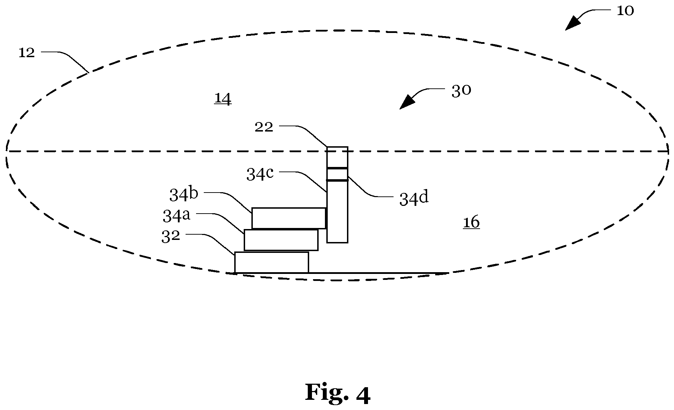

As shown in Fig. 3, a camera comprising an optical sensor 26 may be arranged above the transparent portion or aperture 18. The optical sensor 26 may be attached to a sensor arm 28 which allows for swiveling the optical sensor 26 around the center to capture image data relating to different views of the sample 22 (not shown). To align the sample 22 with the transparent portion or aperture 18 and the optical sensor 26, the sample 22 may be attached to, or placed on a sample holder 30 (not shown). As shown in Fig. 4, the sample holder 30 may comprise a base 32 attached to the lower segment 16 and a kinematic chain which extends from the base 32 and comprises multiple links 34a, 34b, 34c, and 34d which can be (linearly) displaced or rotated relative to each other and the base 32. This may allow positioning the sample 22 in three dimensions as well as rotating or swiveling the sample 22 around a vertical axis.

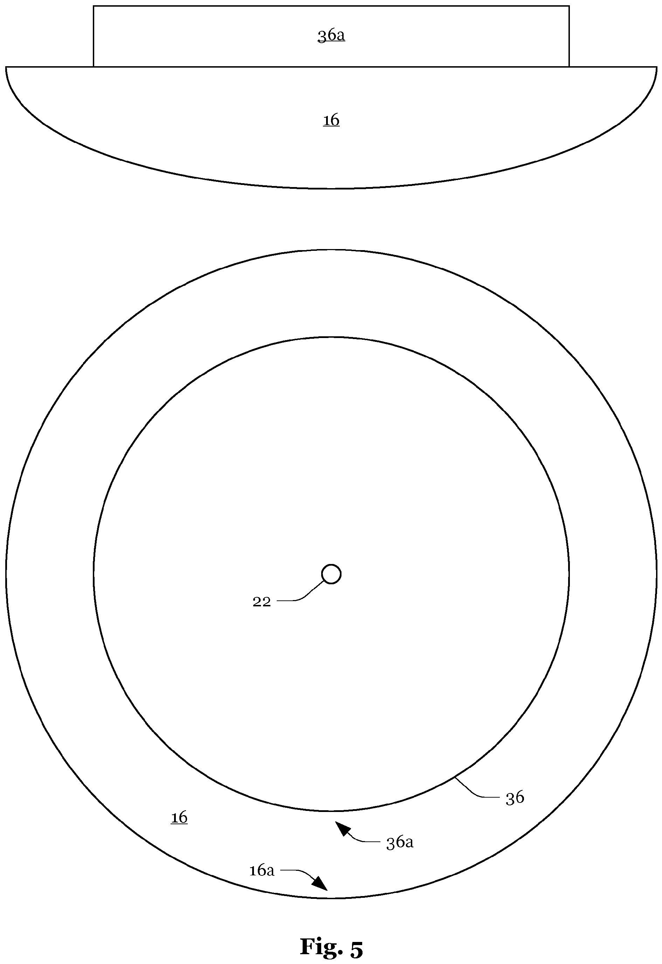

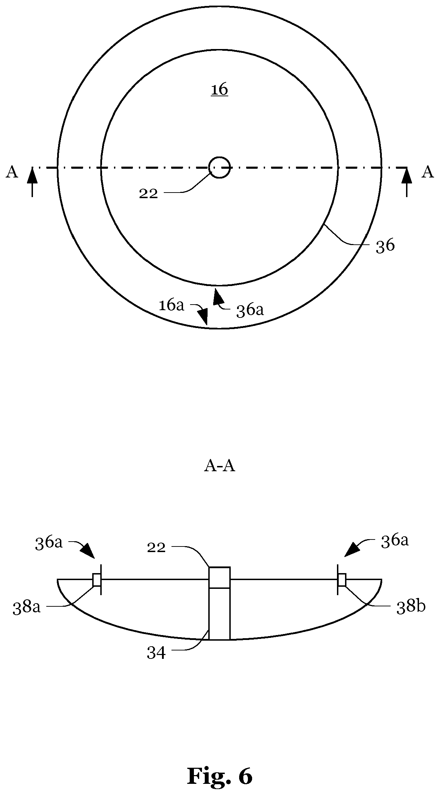

As illustrated in Fig. 5 which shows a schematic side-view and a schematic top-view of the lower segment 16 of the enclosure 12 of the apparatus 10 shown in Fig. 1, the enclosure 12 may accommodate an emitter 36 which extends around the sample 22 or delimits (horizontally) a space in which the sample 22 may be placed. The emitter 36 may be configured to emit electromagnetic radiation from an outward-facing surface 36a of the emitter 36 onto an inward-facing surface 16a of the enclosure 16. The emitter 36 may have a circular shape in top-view and the sample 22 may be placed at the center of a closed planar path along which the emitter 36 extends, to ensure an even illumination of the sample 22. As shown by the cross-sectional view along A-A in Fig. 6, the emitter 36 may comprise a multitude of electromagnetic radiation emitting devices 38 which may be arranged at the outward-facing surface 36a of the emitter 36.

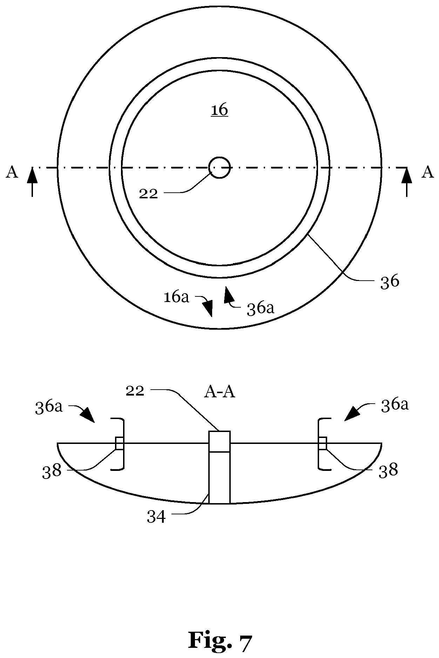

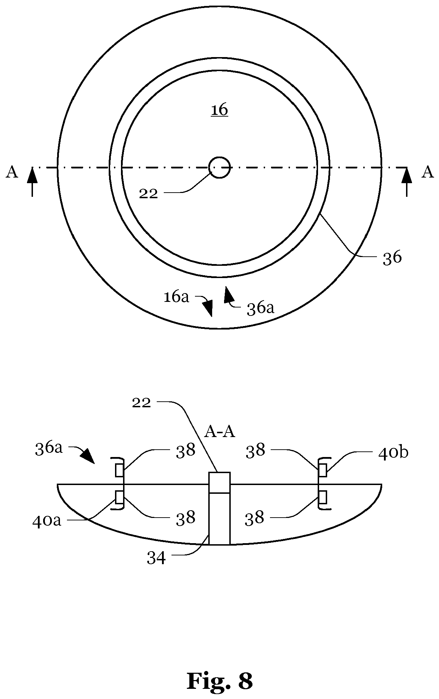

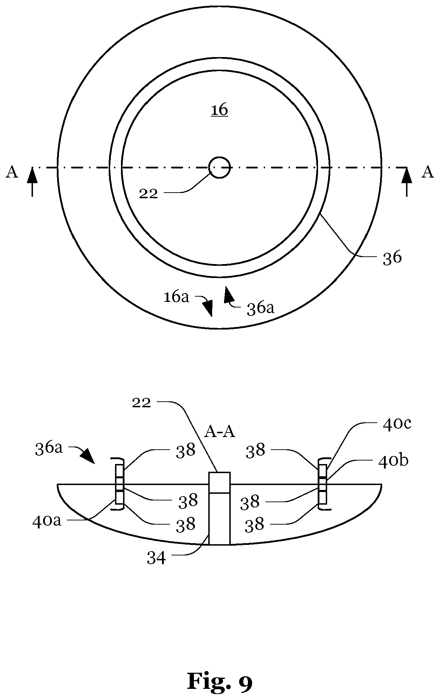

As illustrated in Fig. 7, the cross-section of the outward-facing surface 36a of the emitter 36 may have a concave shape in the form of a C with the C's open side pointing radially outward. As shown in Fig. 8, the emitter 36 may comprise rows 40a and 40b of electromagnetic radiation emitting devices 38 with a vertical gap between the rows 40a and 40b. As shown in Fig. 9 the emitter 36 may also comprise rows 40a, 40b, and 40c of electromagnetic radiation emitting devices 38 with no gap between the rows 40a, 40b, and 40c. The lower segment 16 of the enclosure 12 may allow for replacing a first emitter 36 with a second emitter 36 to adapt the apparatus 10 to the shape, size, and nature of the sample 22. For example, the emitter 36 shown in Fig. 8 may be replaced with the emitter 36 shown in Fig. 9 to increase the intensity of the electromagnetic radiation emitted by the emitter 36 arranged in the enclosure 12. Similarly, a first emitter 36 which emits electromagnetic radiation of a first spectrum may be replaced with a second emitter 36 which emits electromagnetic radiation of a second spectrum (different form the first one).

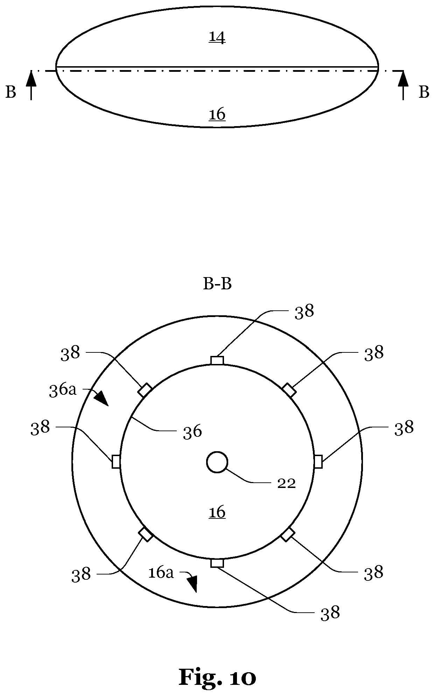

As shown in Fig. 10, the electromagnetic radiation emitting devices 38 of a row 40a, 40b or 40c may be equally distributed around the circumference of the emitter 36. There may be a (constant) gap between neighboring electromagnetic radiation emitting devices 38 within a row 40a, 40b, or 40c, or neighboring electromagnetic radiation emitting devices 38 within a row 40a, 40b or 40c may abut on each other. Moreover, electromagnetic radiation emitting devices 38 in different rows 40a, 40b, and 40c may form a (vertical) column as shown in Fig. 8 and Fig. 9, or electromagnetic radiation emitting devices 38 in different rows 40a, 40b, or 40c may be horizontally displaced relative to each other.

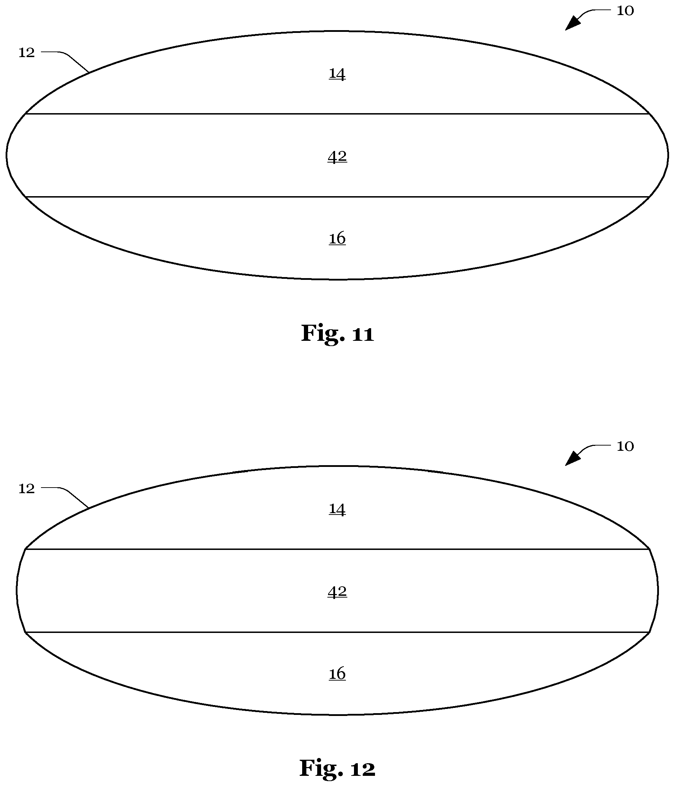

As illustrated in Fig. 11 and Fig. 12, the enclosure 12 may be divided into more segments than the upper segment and 14 the lower segment 16 shown in Fig. 1. I.e., the enclosure 12 may be divided into an upper segment 14, a lower segment 16, and a middle segment 42. Moreover, different types of middle segments 42 may be available to adapt the apparatus 10 to different samples 22 or illumination requirements.

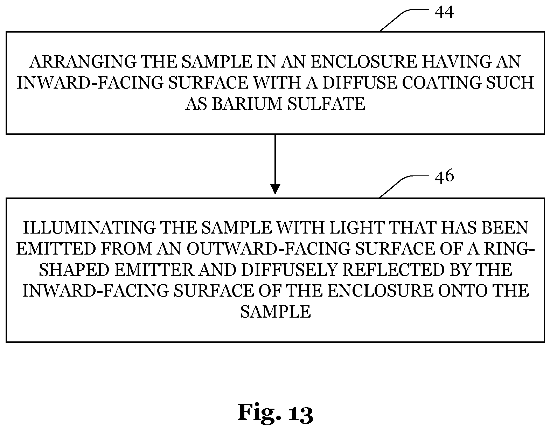

As shown in Fig. 13, a method of illuminating the sample 22 may start with a step 44 of arranging the sample in the enclosure 12 having an inward-facing surface with a diffuse coating such as barium sulfate. As illustrated in Fig. 2, step 44 may involve inserting the sample 22 into the enclosure 16 through opening 20. Moreover, as illustrated in Fig. 4, step 44 may involve attaching the sample 22 to, or placing the sample 22 on the sample holder 30. The sample holder 30 may allow positioning and aligning the sample 22 within the enclosure 12 as illustrated in Fig. 4. The method of illuminating the sample 22 may then be continued with a step 46 of illuminating the sample 22 with light that has been emitted from the outward-facing surface 36a of the ring-shaped emitter 36 and diffusely reflected by the inward-facing surface 16a of the enclosure 16 onto the sample 22.

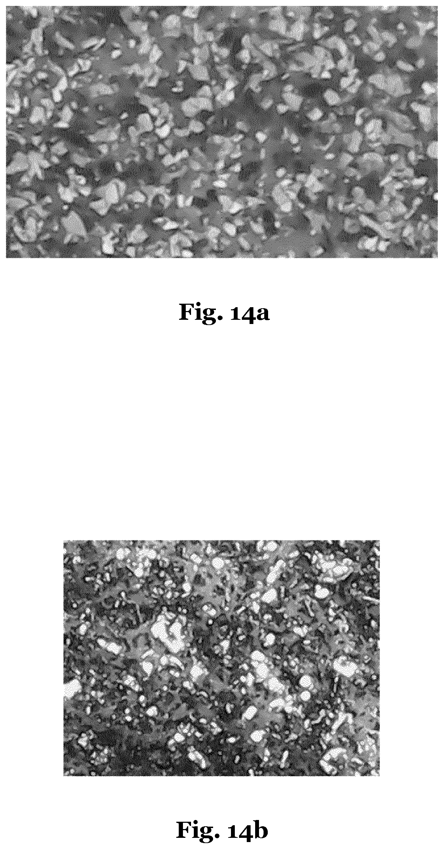

As becomes apparent by comparing Fig. 14a and Fig. 14b, the image data can be used to study pigment particles (size, shape, thickness distribution, aggregation, color, surface texture). Due to the high image quality, the image data can also be used to study fundamental biological mechanisms of cellular and subcellular structures and to visualize and examine biological samples at high resolution, providing valuable insights into cellular processes and structures. The image data can also be used to analyze various aspects of biological systems, such as the morphology and organization of cells, the localization of specific molecules or proteins within cells, and dynamic cellular processes like cell division or migration.

Furthermore, the image data can be used for material characterization and in combination with polarized light techniques to determine crystal structures and study their optical properties (crystallography).

### REFERENCE SIGNS LIST

- 10: apparatus
- 12: enclosure
- 14: upper segment
- 16: lower segment
- 16a: surface
- 18: transparent portion or aperture
- 20: opening
- 22: sample
- 24: channel
- 26: sensor
- 28: arm
- 30: sample holder
- 32: base
- 34a: link
- 34b: link
- 34c: link
- 34d: link
- 36: emitter
- 36a: surface
- 38: electromagnetic radiation emitting device
- 40a: row of electromagnetic radiation emitting devices
- 40b: row of electromagnetic radiation emitting devices
- 40c: row of electromagnetic radiation emitting devices
- 42: middle segment
- 44: step
- 46: step

## Claims

1. An apparatus (10) for capturing image data relating to a sample (22), comprising:
a sample holder (30);
an emitter (36) which is configured to emit electromagnetic radiation; and
an enclosure (12) which is configured to accommodate the emitter (36) and the sample (22);
wherein the emitter (36) extends along a closed planar path;
wherein the sample holder (30) is configured to hold the sample (22) or a surface of interest of the sample (22) in a vicinity of, or intersecting with, a center of the closed planar path or a straight line which runs through the center and extends perpendicular to the closed planar path; and
wherein the emitter (36) is configured to emit the electromagnetic radiation from an outward-facing surface (36a) of the emitter (36) onto an inward-facing surface (16a) of the enclosure (12) which is configured to diffusively reflect the electromagnetic radiation onto the sample (22).

2. The apparatus (10) of claim 1, further comprising:
a plurality of electromagnetic radiation emitting devices (38) which are evenly distributed along the closed planar path.

3. The apparatus (10) of claim 1 or 2, wherein the closed planar path is a circle.

4. The apparatus (10) of claim 3, wherein a space inside the enclosure (12) is substantially cylindrically or circularly symmetric to an axis colinear with the straight line.

5. The apparatus (10) of any one of claims 1 to 4, wherein the straight line runs through a transparent portion (18) of, or an aperture (18) in the enclosure (12).

6. The apparatus (10) of claim 5, further comprising a sensor (26) which is configured to detect the electromagnetic radiation, wherein preferably the sensor (26) is attached to a sensor arm (28) of the apparatus (10) which allows for rotating the sensor (26) around a point on the straight line.

7. The apparatus (10) of any one of claims 1 to 6, wherein a cross section of the outward-facing surface (36a) has a concave shape.

8. The apparatus (10) of any one of claims 1 to 7, wherein the enclosure (12) comprises a lower segment (16) having a bottom and an upper segment (14) having a top, wherein the lower segment (16) tapers towards the bottom and the upper segment (14) tapers towards the top.

9. The apparatus (10) of any one of claims 1 to 8, wherein the enclosure (12) and the outward-facing surface (36a) comprise aligned openings which allow for attaching the sample (22) to, or placing the sample (22) on the sample holder (30).

10. The apparatus (10) of any one of claims 1 to 9, wherein the inward-facing surface (16a) of the enclosure (12) is coated with barium sulfate.

11. A method of illuminating a sample (22), comprising:
arranging the sample (22) in an enclosure (12) having an inward-facing surface (16a) with a diffuse coating such as barium sulfate; and
illuminating the sample (22) with light that has been emitted from an outward-facing surface (36a) of a ring-shaped emitter (36) and diffusely reflected by the inward-facing surface (16a) of the enclosure (12) onto the sample (22).

12. The method of illuminating a sample (22) of claim 11, wherein the ring-shaped emitter (36) extends around the sample (22).

13. The method of illuminating a sample (22) of claim 11 or 12, wherein a cross section through the ring-shaped emitter (36) has a U-shaped or C-shaped portion directing the light that has been emitted from the outward-facing surface (36a) of the ring-shaped emitter (36) radially toward the inward-facing surface (16a) of the enclosure (12).

14. The method of illuminating a sample (22) of claim 13, wherein the U-shaped, C-shaped, or I-shaped portion comprises legs which are coated with barium sulfate.

15. The method of illuminating a sample (22) of any one of claims 11 to 14, further comprising:
recording an image of a surface of the sample (22); and
analyzing the recorded image.

## Amended claims

### Amended claims in accordance with Rule 137(2) EPC.

1. An apparatus (10) for capturing image data relating to a sample (22), comprising:
a sample holder (30);
an emitter (36) which is configured to emit electromagnetic radiation; and
an enclosure (12) which is configured to accommodate the emitter (36) and the sample (22);
wherein the emitter (36) extends along a closed planar path;
**characterized in that**
the sample holder (30) is configured to hold the sample (22) or a surface of interest of the sample (22) in a vicinity of, or intersecting with, a center of the closed planar path; and
the emitter (36) is configured to emit the electromagnetic radiation from an outward-facing surface (36a) of the emitter (36) onto an inward-facing surface (16a) of the enclosure (12) which is configured to diffusively reflect the electromagnetic radiation onto the sample (22);
the enclosure (12) comprises a lower segment (16) having a bottom and an upper segment (14) having a top, wherein the lower segment (16) tapers towards the bottom and the upper segment (14) tapers towards the top.

2. The apparatus (10) of claim 1, wherein the closed planar path lies in a plane which divides a cavity formed by the enclosure (12) into two halves of substantially equal size.

3. The apparatus (10) of claim 1 or 2, further comprising:
a plurality of electromagnetic radiation emitting devices (38) which are evenly distributed along the closed planar path.

4. The apparatus (10) of any one of claims 1 to 3, wherein the closed planar path is a circle.

5. The apparatus (10) of claim 4, wherein a space inside the enclosure (12) is substantially cylindrically or circularly symmetric to an axis colinear with a straight line which runs through the center and extends perpendicular to the closed planar path.

6. The apparatus (10) of any one of claims 1 to 5, wherein a straight line which runs through the center and extends perpendicular to the closed planar path runs through a transparent portion (18) of, or an aperture (18) in the enclosure (12).

7. The apparatus (10) of claim 6, further comprising a sensor (26) which is configured to detect the electromagnetic radiation, wherein preferably the sensor (26) is attached to a sensor arm (28) of the apparatus (10) which allows for rotating the sensor (26) around a point on the straight line.

8. The apparatus (10) of any one of claims 1 to 7, wherein a cross section of the outward-facing surface (36a) has a concave shape.

9. The apparatus (10) of any one of claims 1 to 8, wherein the enclosure (12) and the outward-facing surface (36a) comprise aligned openings which allow for attaching the sample (22) to, or placing the sample (22) on the sample holder (30).

10. The apparatus (10) of any one of claims 1 to 9, wherein the inward-facing surface (16a) of the enclosure (12) is coated with barium sulfate.

11. A method of illuminating a sample (22), comprising:
arranging the sample (22) in an enclosure (12) having an inward-facing surface (16a) with a diffuse coating such as barium sulfate;
the method being **characterized by**
illuminating the sample (22) with light that has been emitted from an outward-facing surface (36a) of a ring-shaped emitter (36) and diffusely reflected by the inward-facing surface (16a) of the enclosure (12) onto the sample (22);
wherein the ring-shaped emitter (36) extends around the sample (22); and
wherein the enclosure (12) comprises a lower segment (16) having a bottom and an upper segment (14) having a top, wherein the lower segment (16) tapers towards the bottom and the upper segment (14) tapers towards the top.

12. The method of illuminating a sample (22) of claim 11,
wherein the lower segment is bowl-shaped;
wherein the upper segment is bowl-shaped;
wherein the bowl-shaped segments are joined at their rims.

13. The method of illuminating a sample (22) of claim 11 or 12, wherein a cross section through the ring-shaped emitter (36) has a U-shaped or C-shaped portion directing the light that has been emitted from the outward-facing surface (36a) of the ring-shaped emitter (36) radially toward the inward-facing surface (16a) of the enclosure (12).

14. The method of illuminating a sample (22) of claim 13, wherein the U-shaped or C-shaped portion comprises legs which are coated with barium sulfate.

15. The method of illuminating a sample (22) of any one of claims 11 to 14, further comprising:
recording an image of a surface of the sample (22); and
analyzing the recorded image.
